# EUROPEAN PATENT APPLICATION

(11) **EP 0 751 635 A2**
(43) Date of publication of application: **02.01.1997**
(21) Application number: 96400289.3
(22) Date of filing: 13.02.1996
(51) Int. Cl.: H04B 10/08

(54) **Supervisory apparatus for wavelength-division-multiplexed optical data communications**

(30) Priority: 26.06.1995 JP 159399/95
(71) Applicant: FUJITSU LIMITED, Kawasaki-shi, Kanagawa 211 (JP)
(72) Inventor: Suyama, Masuo, Kawasaki-shi, Kanagawa 211 (JP)
(74) Representative: Joly, Jean-Jacques

(57) **Abstract**

The apparatus is used for supervising communications based on wavelength-division multiplexed (WDM) techniques that provide a plurality of transmission channels multiplexed with a plurality of optical signals having different wavelengths. Using those optical signals having different wavelengths, transmission means (2) in a sender (terminal station) (1) transmits a plurality of main signals to a receiver (7) via a plurality of channels in an optical fiber (9). In addition to the main signals, the transmission means sends a command signal by superimposing it on the plurality of main signals conveyed on the respective channels. Extraction means (8) in the receiver extracts the command signal out of the signals sent from the transmission means. The transmission means in the sender also sends a response signal by superimposing it on the plurality of main signals conveyed on the respective channels. The receiver extracts the superimposed response signal out of the received optical signals as well as extracting the main signals therefrom.

## Description

### BACKGROUND OF THE INVENTION

### 1. Field of the Invention

The present invention relates to a supervisory apparatus for wavelength-division-multiplexed optical data communication systems which provide a plurality of transmission channels multiplexed with a plurality of optical signals having different wavelengths, and more specifically, to a supervisory apparatus for repeaters having an optical amplifier for use in submarine optical data communication systems which provide very high bandwidth data transmission over long distances.

### 2. Description of the Related Art

The increasingly high density of network traffic in recent years encourages development of submarine optical cable systems. For example, the Trans-Pacific Cable TPC-5N is under construction to provide a data link of 9,000 Km total distance and data speed of 5 Gb/s, equipped with optical-amplifier repeaters with spacing of 33 Km.

In conventional high-speed data transmission systems for long distance services using optical amplifiers for their repeaters, each optical fiber only conveys a single-wavelength optical signal, and there is provided a well-known technique to supervise the repeaters used in this scheme. That is, in its supervisory action, a land terminal station transmits a command signal to a repeater to request monitoring information, superimposing the signal on a main signal. The repeater sends back its monitoring information to the land terminal station in a response signal superimposed on the returning main signal. This superimposition of the command or response signal on the main signal is performed in the way of optical amplitude modulation, where the command or response signal modulates the amplitude of the main signal with about 5 % modulation degree.

Such usage of the optical fiber dedicated to a single light wave, however, has a limitation in performance enhancement. As opposed to this, a wavelength division multiplexing (WDM) deserves a special attention in its potential for longer transmission distances and larger capacity. This WDM method uses a plurality of optical signals having wavelengths different from each other to provide a plurality of transmission channels, respectively.

There is a problem, however, that nothing has been proposed about how to superimpose the command or response signal on a plurality of main signals. Another unsolved problem is how to transfer the command and response signals in case that some channels have failed and are unable to convey some of the main signals.

### SUMMARY OF THE INVENTION

Taking the above into consideration, an object of the present invention is to provide a supervisory apparatus for wavelength-division-multiplexed optical data communication systems, capable of supervising the repeaters in a simple way.

To accomplish the above object, according to the present invention, there is provided a supervisory apparatus for a wavelength-division-multiplexed optical data communication system which provides communications in a plurality of channels multiplexed with a plurality of optical signals having different wavelengths. This supervisory apparatus comprises transmission means, provided in a sender (transmitter), for superimposing a command signal on a plurality of main signals of the respective channels and transmitting those signals, and extraction means, provided in a receiver, for extracting the command signal out of the signals transmitted by the transmission means.

Further, another supervisory apparatus comprises transmission means for superimposing a response signal on the plurality of main signals of the respective channels and transmitting those signals, and extraction means for extracting the response signal out of the signals transmitted by the transmission means.

The above and other objects, features and advantages of the present invention will become apparent from the following description when taken in conjunction with the accompanying drawings which illustrate preferred embodiments of the present invention by way of example.

### BRIEF DESCRIPTION OF THE DRAWINGS

FIG. 1(A) is a conceptual view showing a send/receive scheme for a command signal in the present invention;
FIG. 1(B) is a conceptual view showing a send/receive scheme for a response signal in the present invention;
FIG. 2 is a block diagram of a sender terminal station in a first embodiment;
FIG. 3 is a block diagram of a main signal modulation driver circuit;
FIG. 4 is a block diagram of a command modulation circuit;
FIG. 5 is a block diagram of an optical source;
FIG. 6 is a block diagram of an external modulator;
FIG. 7 is a block diagram of a supervisory control unit;
FIG. 8 is a block diagram of a repeater in the first embodiment;
FIG. 9 is a detailed block diagram of the repeater in the first embodiment;
FIG. 10 is a block diagram of a receiver terminal station unit in the first embodiment; and
FIG. 11 is a block diagram of a sender terminal station unit in a second embodiment.

### DESCRIPTION OF THE PREFERRED EMBODIMENTS

Two embodiments of the present invention will be described below with reference to the drawings.

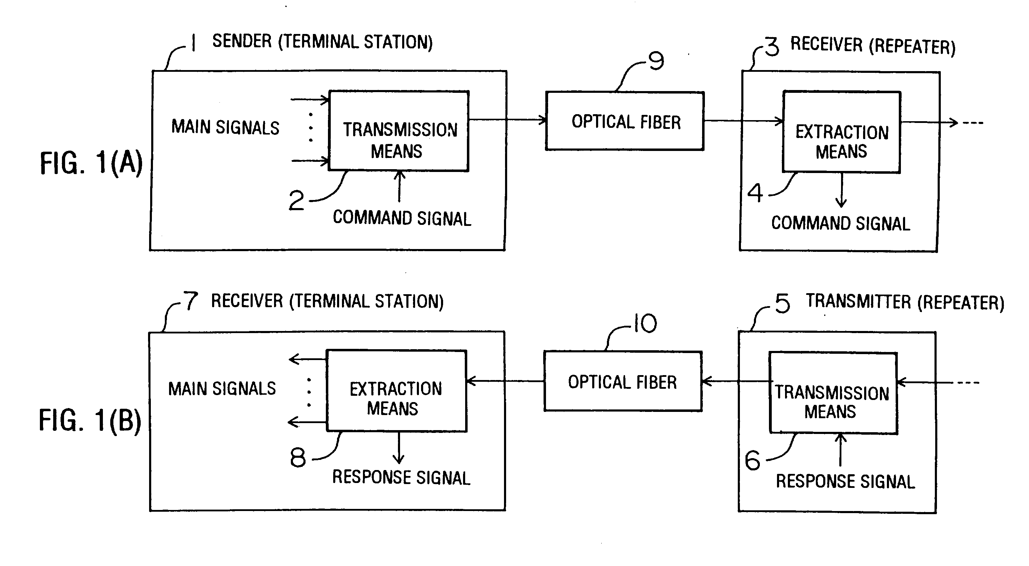

First, FIGS. 1(A) and 1(B) provide the principle of a first embodiment of the present invention. FIG. 1(A) shows a conceptual view of a send/receive scheme for a command signal, and FIG. 1(B) shows that for a response signal.

Main constituents to send and receive the command signal include transmission means 2 provided in a sender or transmitter 1 to transmit the command signal by superimposing it equally on a plurality of main signals conveyed on the respective channels, and extraction means 4 provide in a receiver 3 to extract the command signal out of the signals transmitted by the transmission means 2. In FIG. 1(A), the sender 1 is a terminal station and the receiver 3 is a repeater.

Symmetrically, main constituents to send and receive the response signal include another transmission means 6 provided in a sender 5 to transmit the response signal by superimposing it on a plurality of main signals Of the respective channels, and another extraction means 8 provided in a receiver 7 to extract the response signal out Of the signals transmitted by the transmission means 6. Note that the sender 5 is a repeater and the receiver 7 is a terminal station in FIG. 1(B).

In the structural arrangement shown in FIG. 1(A), the transmission means 2 in the sender 1 transmits a plurality of main signals of the respective channels to the receiver 3 via a single optical fiber 9, using a plurality of optical signals having different wavelengths from each other. The transmission means 2 also sends the command signal superimposing it on all the main signals in order to request a specific repeater to report its monitoring information.

The receiver 3 optically amplifies the main signals of the respective channels, which are transmitted by the sender 1 in the form of optical signals, and forwards them to the next repeater (not shown). At that time, the extraction means 4 in the receiver 3 extracts the command signal from the signals sent by the transmission means 2. If the receiver 3 command signal finds it to be a request directed to the receiver itself, it sends back its own monitoring information in the response signal as described later on.

On the other hand, in the structural arrangement as shown in FIG. 1(B), the sender 5 optically amplifies the main signals of the respective channels which the previous repeater (not shown) transmitted in the form of optical signals and forwards them to the receiver 7 via the optical fiber 10. At that time, the transmission means 6 in the sender 5 also superimposes the response signal equally on all the main signals. The receiver 7 extracts the response signal from the received optical signals as well as drawing out the main signals therefrom.

As described above, because the same single command or response signal is transmitted being superimposed on a plurality of main signals conveyed on the respective channels, the extraction means in the receiver side can surely extract the command or response signal even if a trouble happened in any channel thereof.

The more detailed explanation on the first embodiment will follow.

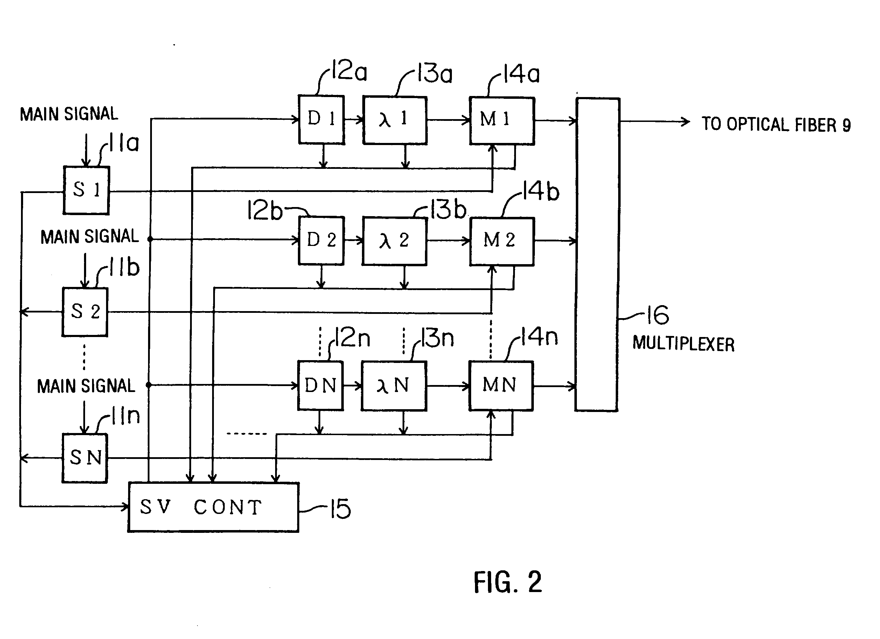

FIG. 2 is a block diagram of a sender terminal station unit in the first embodiment. The structure shown in FIG. 2 corresponds to the transmission means 2 in FIG. 1(A). The first embodiment is actually a wavelength-division-multiplexed optical data communication system which provides N channels of data transmission lines using N kinds of light waves having different wavelengths, where N is an integer indicating the number of channels.

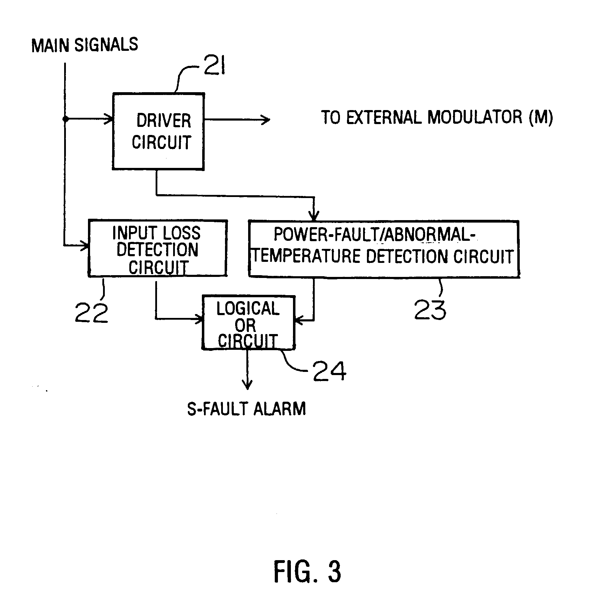

In FIG. 2, the main signals of N channels are applied to respective main signal modulation drivers (S1-SN) 11a-11n to be amplified individually and output to external modulators (M1-MN) 14a-14n. In addition to amplification, the main signal modulation drivers 11a-11n perform self-diagnosis to detect any problem with the circuit of themselves and/or the main signals that they have received. If any problem is found, the main signal modulation drivers will send an S-fault alarm to a supervisory control unit (SV CONT) 15. The internal structure of the main signal modulation drivers 11a-11n will be described later on with reference to FIG. 3.

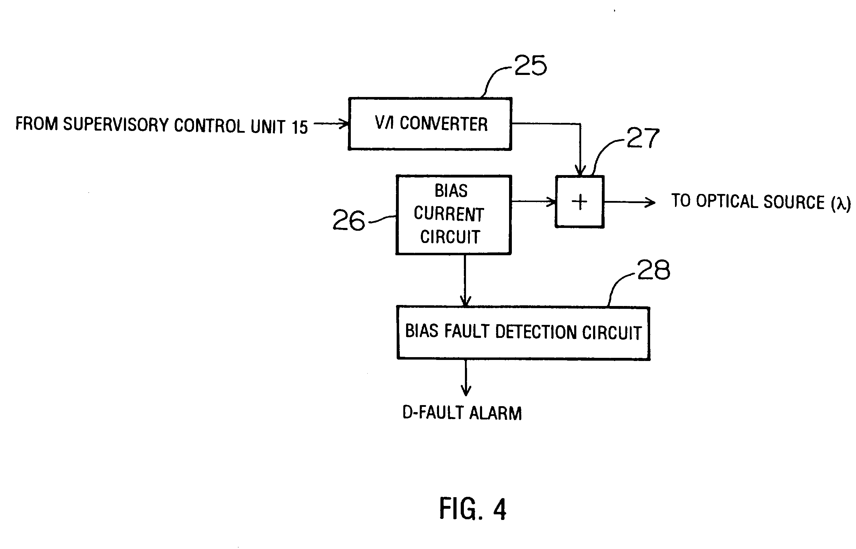

Command modulation circuits (D1-DN) 12a-12n, dedicated to the respective channels, convert the original command signal sent from the supervisory control unit 15 into current signals and apply them to optical sources (λ1-λN) 13a-13n, respectively, for direct modulation of the light outputs. The command modulation circuits 12a-12n also perform self-diagnosis to detect any problem with the circuit of themselves. The problem, if found, will be reported to the supervisory control unit 15 as a D-fault alarm. The internal structure of the command modulation circuits 12a-12n will be described later on with reference to FIG. 4.

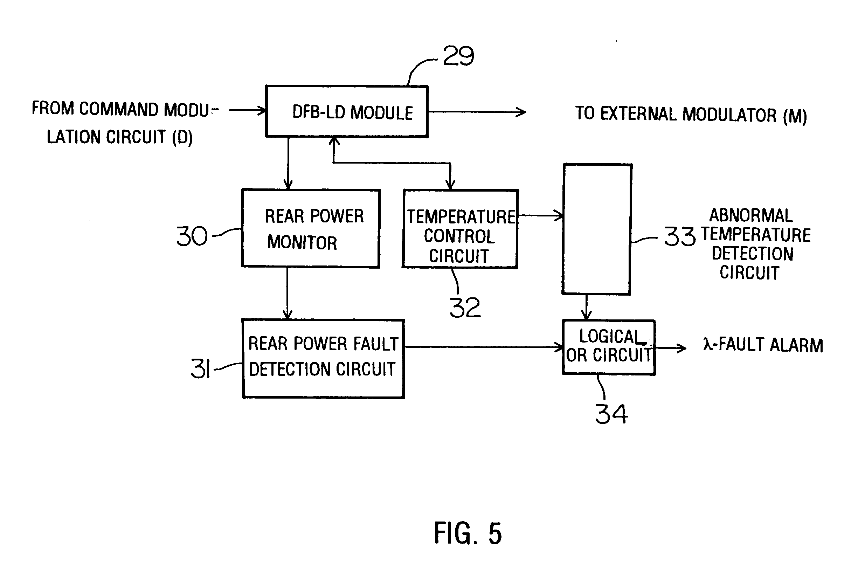

The optical sources 13a-13n, dedicated to the respective channels, generate laser beams having different wavelengths from each other, whose intensity is directly modulated by the outputs from the command modulation circuits 12a-12n, respectively. The optical sources 13a-13n also perform self-diagnosis to detect any problem with its own circuitry, and will send a λ-fault alarm to the supervisory control unit 15, if it is detected. The internal structure of the optical sources 13a-13n will be described later on with reference to FIG. 5.

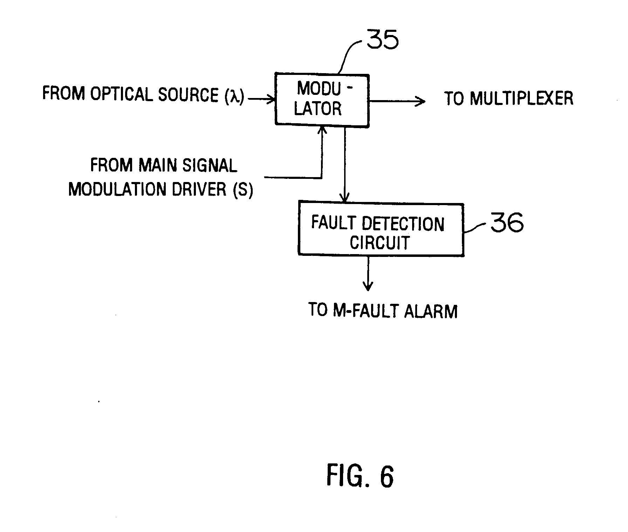

The external modulators 14a-14n, dedicated to the respective channels, apply an external modulation to the laser beams from the optical sources 13a-13n with the outputs of the main signal modulation drivers 11a-11n, respectively. The external modulators 14a-14n also perform self-diagnosis to detect any problem with the circuit of themselves, and will send an M-fault alarm to the supervisory control unit 15, if it is detected. The internal structure of the external modulators 14a-14n will be described later on with reference to FIG. 6.

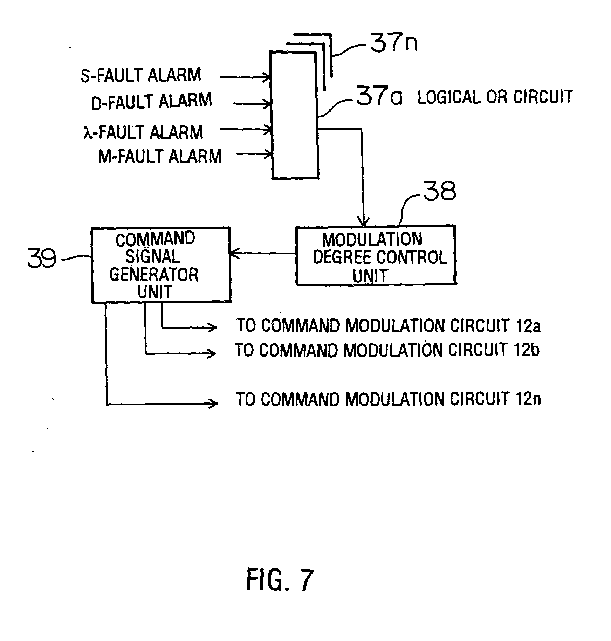

Receiving the various alarm signals, the supervisory control unit 15 recognizes a channel fault and sends the same command signal to the command modulation circuits of the channels in operation. The command signal is actually derived from an external control command and its amplitude is set to a certain level depending on the number of the channels in operation as described later in detail. This amplitude of the command signal determines the degree of the direct modulation to be performed by the command modulation circuits 12a-12n. Further description regarding the internal structure of the supervisory control unit 15 will be provided later with reference to FIG. 7.

Provided by the external modulators 14a-14n with the optical signals having different wavelengths, a multiplexer 16 outputs the mixed optical signals to the optical fiber 9, serving as the final stage of the wavelength division multiplexing scheme.

FIG. 3 is a block diagram showing the internal structure of any one of the main signal modulation drivers 11a-11n. That is, the main signal is supplied to a driver circuit 21 so as to provide the corresponding external modulator with the amplified main signal, as well as to an input loss detection circuit 22 for qualifying the input of the main signal. If this main signal input is stopped, an input-loss alarm signal will be sent to a logical OR circuit 24. In addition to this input-loss detection, a power-fault/abnormal-temperature detection circuit 23 monitors the status of the driver circuit 21 and sends another alarm signal to the logical OR circuit 24, if any fault is detected. With the input-loss alarm signal and/or this further alarm signal, the logical OR circuit 24 outputs the S-fault alarm to the supervisory control unit 15.

FIG. 4 is a block diagram showing the structure of any one of the command modulation circuits 12a-12n. The supervisory control unit 15 supplies a voltage-to-current (V/I) converter 25 with the command signal whose amplitude is set as described above. The V/I converter 25 converts this voltage signal to a current signal, while a bias current circuit 26 generates a predetermined bias current for power input of the optical source. This V/I-converted main signal and the generated bias current are added by a current adder 27 to provide the corresponding optical source with its drive current. A bias fault detection circuit 28 watches the bias current circuit 26, and if any fault is detected, it will send the D-fault alarm to the supervisory control unit 15.

FIG. 5 is a block diagram showing the internal structure of any one of the optical sources 13a-13n. That is, a distributed-feedback laser diode (DFB-LD) module 29 is a distributed-feedback semiconductor laser, which generates a laser beam directly modulated with the drive current from the corresponding command modulation circuit and supplies the generated laser beam to the external modulator associated with it. The frequency of the V/I-converted command signal is about 10 MHz, which is lower than that of the main signal to be explained later on. A rear power monitor 30 monitors the laser output level of the DFB-LD module 29, and a rear power fault detection circuit 31 will send an output-level alarm signal to a logical OR circuit 34, if the laser output level is found abnormal. While a temperature control circuit 32 regulates the temperature of the DFB-LD module 29, an abnormal temperature detection circuit 33 is responsible for detecting any error that would stop the temperature control circuit 32 and generating a temperature alarm signal to the logical OR circuit 34. With the output-level alarm and/or the temperature alarm, the logical OR circuit 34 sends the λ-fault alarm to the supervisory control unit 15.

FIG. 6 is a block diagram showing the internal structure of any one of the external modulators 14a-14n. Using the main signal from the corresponding main signal modulation driver, a modulator 35 applies an external modulation to the laser beam from the corresponding optical source. The modulated laser beam is then supplied to the multiplexer 16. The data rate of the main signal is of the order of gigabit per second (Gb/s) and it requires higher modulation speed than that of the command signal. A fault detection circuit 36 is monitoring the modulator 35 and will report its fault to the supervisory control unit 15 as the M-fault alarm.

FIG. 7 is a block diagram showing the internal structure of the supervisory control unit 15, The supervisory control unit 15 contains logical OR circuits 37a-37n, each of which receives the S-fault, D-fault, λ-fault and M-fault alarms of each channel. When any of those alarms becomes active, the logical OR circuits 37a-37n recognize it as a fault of the corresponding channel and then notify a modulation degree control unit 38 of the channel fault. This modulation degree control unit 38 informs the command signal generator unit 39 of which channels are available for further operations, and at the same time, sets the degree of modulation in the following manner. The standard value A of the degree of modulation, which is applicable to each channel when all the N channels are operational, is first determined depending upon demodulators' sensitivity in the receiver. Then, in consideration of the number (L) of the faulty channels, the degree of modulation for the operational channels is determined as {N/(N-L)}A. Triggered by an external operation, the command signal generator unit 39 actually generates the command signal with amplitude adjusted to the determined degree of modulation.

The command signal generator unit 39 distributes the same command signal having the adjusted amplitude to the command modulation circuits only of the operational channels. As described before, the command modulation circuits of the operational channels directly modulate the respective optical sources. This results in the intended degree of modulation in accordance with the amplitude of the command signal.

Because the degree of modulation is determined in consideration of the number of operational channels that remain without fault, it is possible to obtain a constant-strength receiver output for the command signal regardless of the presence of or the number of faulty channels by summing up all the command signals received in the respective channels. In other words, if the transmitter did not care about the presence of or the number of faulty channels and only provided a constant degree of modulation, the strength of the command signal in terms of the degree of modulation to the total power level would be reduced to (N-L)A/N, particularly when L channels were unable to transfer the command signal due to some troubles. On the other hand, since the repeater to receive the command signal should be as simple as possible in its structure, it would preferably be configured so that it receive the whole signal power without using an optical splitter. The repeater configured as such might not be able to receive the command signal if its degree of modulation was degraded by the channel fault. The present invention will solve this problem by determining the degree of modulation taking the number of operational channels into account.

Incidentally, even if a part of the faulty channels has recovered their performance, the modulation degree control unit 38 will set the degree of modulation just as described above, assuming that L channels are still out of order.

The next explanation will devote to the repeater configuration in the first embodiment of the present invention.

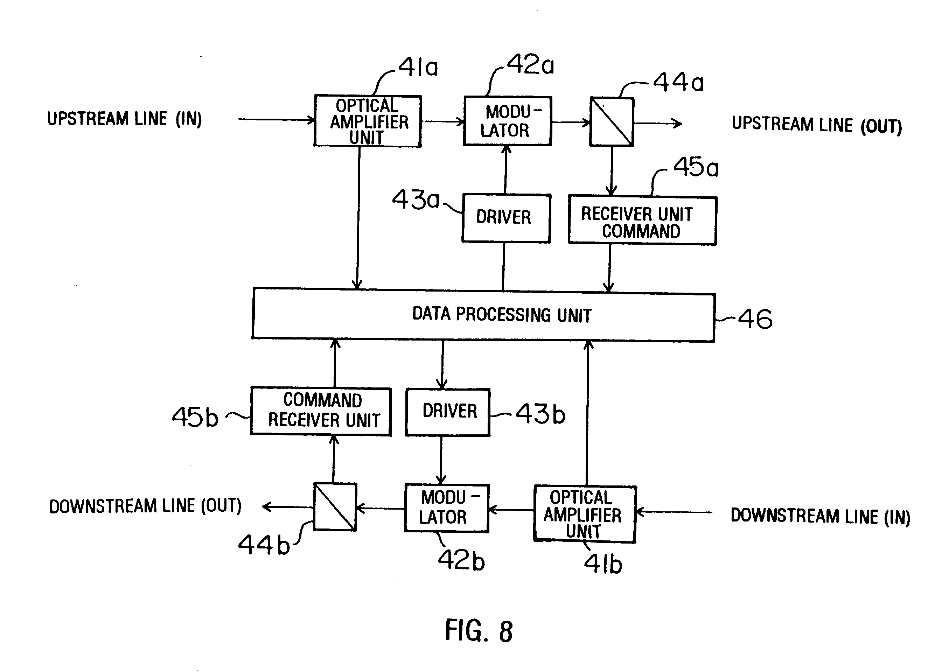

FIG. 8 is a block diagram showing the structure of the repeater in the first embodiment, which is associated with the extraction means 4 in the receiver 3 and the transmission means 6 in the sender 5, both as shown in FIG. 1.

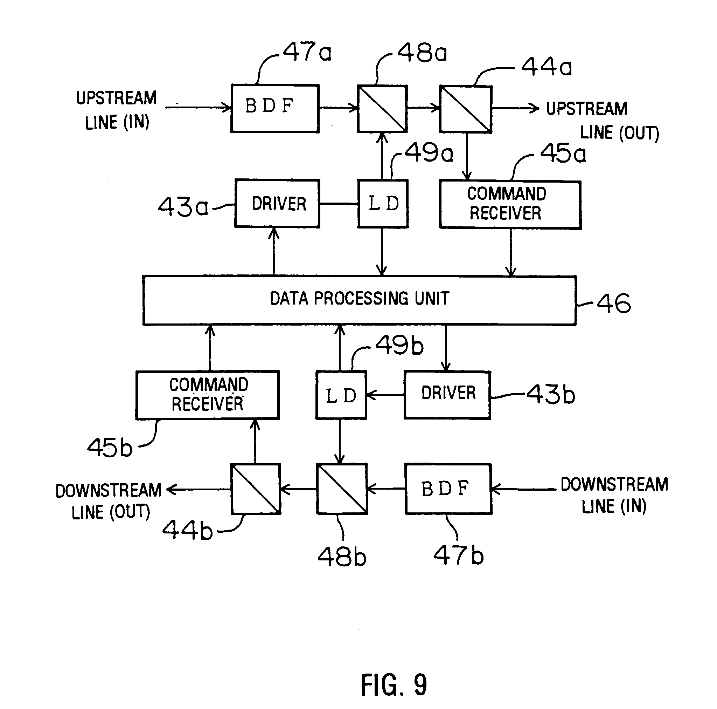

The repeater is composed of elements 41a-45a for the upstream line, elements 41b-45b for the downstream line, and a data processing unit 46 commonly used by the both line elements. The optical amplifier units 41a and 41b amplify the WDM optical signals as they are (i.e., not converting them into electrical signals for amplification) as well as sending their individual status signals to the data processing unit 46. The modulators 42a and 42b modulate the amplified optical signals with the response signals from the drivers 43a and 43b, respectively, in the way of superposition of the same response signals equally on all the channels. The drivers 43a and 43b are amplifiers for the respective response signals from the data processing unit 46. As for the modulators 42a and 42b, a further description will be provided later on with reference to FIG. 9.

The command receivers 45a and 45b extract the respective command signals from the optical signals split off at the optical couplers 44a and 44b, and send them to the data processing unit 46. The response signals are of the order of kHz in its frequency range, while the command signals are of the order of 10 MHz. This difference in frequency ranges enables the command receivers 45a and 45b to selectively receive the command signals.

Note that the command receivers 45a and 45b receive the optical signal not via a single channel but via all the channels. As previously described, the degree of modulation of the command signal is adjusted according to the number of operational channels. Therefore, the command signal received by the command receivers 45a and 45b will maintain a constant signal strength even though the available channels are reduced due to some channel faults.

When the data processing unit 46 receives a command signal from one line, it returns a response signal via the other line if the command signal has turned out to be addressed to the repeater that it belongs to. For example, when the command receiver 45a for the upstream line has received a command signal addressed to it, the data processing unit 46 sends a response signal containing the status signals of the optical amplifier units 41a and 41b to the terminal station via the driver 43b and modulator 42b for the downstream line.

FIG. 9 is a block diagram showing the detailed structure of the repeater which was introduced in FIG. 8. Since some of the elements shown in FIG. 9 are common to those in FIG. 8, the same reference numerals are attached to such elements for convenience, but the following explanation will not repeat the description for them.

The repeater shown in FIG. 9 has erbium-doped fiber (EDF) optical amplifiers 47a and 47b for the optical amplifier units 41a and 41b in FIG. 8. For the modulators 42a and 42b, the repeater incorporates WDM couplers 48a and 48b in combination with laser diodes (LD) 49a and 49b. This configuration performs modulation of the gain of the EDF amplifiers 47a and 47b optically pumped by the outputs of the laser diodes 49a and 49b, respectively, which outputs may involve the response signals. The laser diodes 49a and 49b also send their status signals to the data processing unit 46, which information is forwarded to the terminal station with the response signal.

The next explanation will clarify the receiver terminal station unit in the first embodiment.

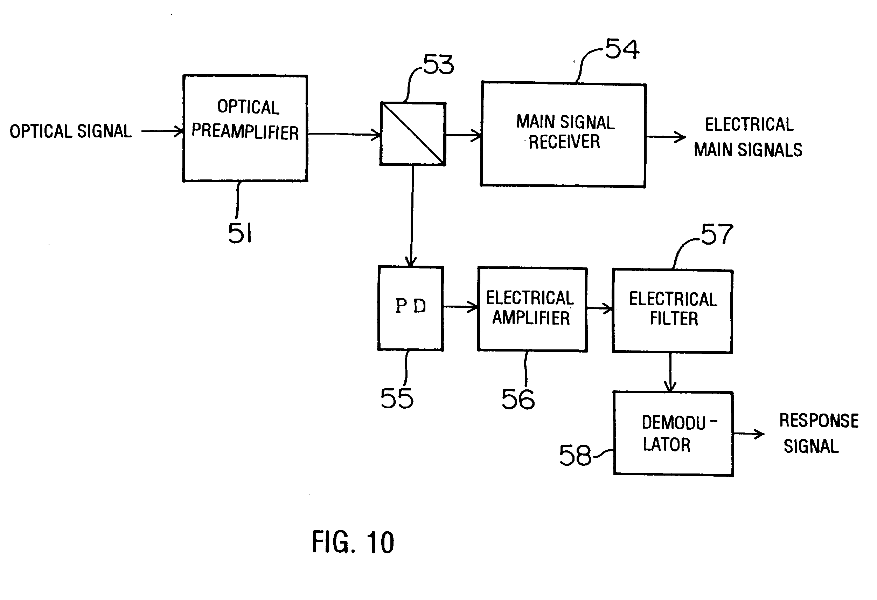

FIG. 10 is a block diagram showing the structure of the receiver terminal station unit in the first embodiment, which corresponds with the extraction means 8 in the receiver 7 shown in FIG. 1.

An optical preamplifier 51 optically amplifies the optical signal provided through the optical fiber 10 (See FIG. 1). An optical coupler 53 splits the light into two parts in the ratio of 10:1, and sends the major part to a main signal receiver 54 and the rest to a photodiode (PD) 55. The prime constituents of the main signal receiver 54 include a band-pass filter (BPF), an optical splitter and optical detectors dedicated to the respective channels. That is, the main signal receiver 54 only passes WDM optical signals having wavelengths in a predetermined range, demultiplexes the passed WDM optical signals into the original pieces, and converts them to separate electrical signals. On the other hand, the photodiode 55 extracts the response signal and outputs it as an electrical signal. This electrical response signal is then sent to a demodulator 58 via an electrical amplifier 56 and an electrical filter 57 to recover the original response signal.

To summarize the first embodiment, the sender transmits the command signal or response signal by superimposing it on a plurality of main signals conveyed in the respective channels, and therefore, the receiver can surely extract the command or response signal even if some of the channels have failed. In the WDM optical data communication systems, this scheme facilitates their supervisory action to the repeaters.

Next, the following explanation will provide a second embodiment of the present invention. The second embodiment, basically having the same structure as that of the first embodiment, is equipped with a different type of sender terminal station unit.

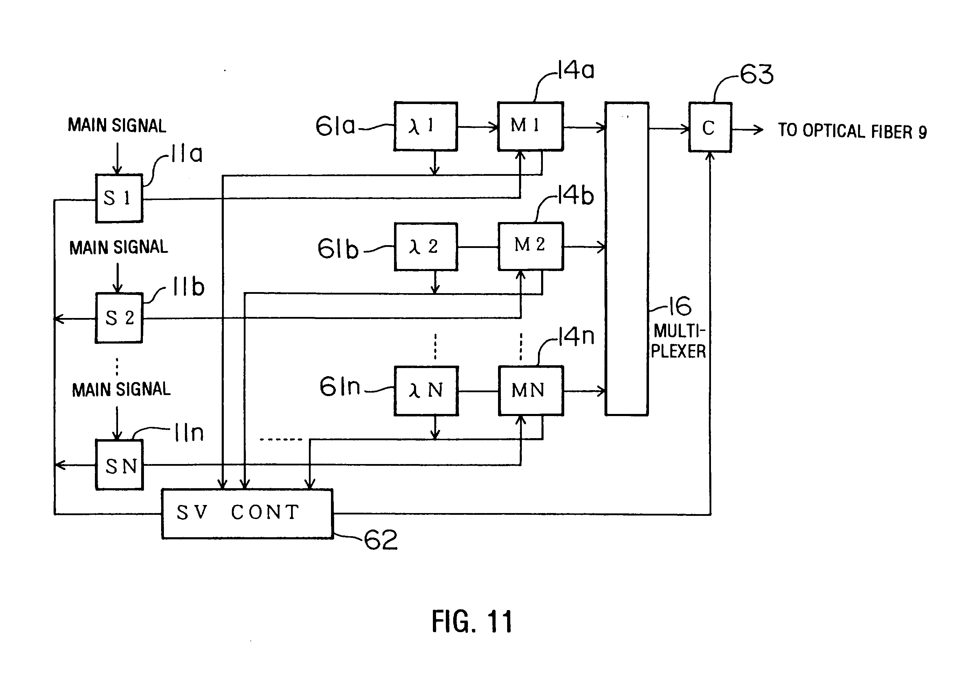

FIG. 11 is a block diagram of a sender terminal station unit in the second embodiment. The constituents that have already appeared in the first embodiment bear the same reference numerals and their explanation will be omitted in the following description.

In the second embodiment, optical sources (λ1-λN) 61a-61n for respective channels produce light beams having different wavelengths, however, they are not subject to the direct modulation unlike the first embodiment. The optical sources 61a-61n monitor their own circuitry, and will send λ-fault alarm to a supervisory control unit (SV CONT) 62 if any problem is found.

The supervisory control unit 62 will receive S-fault alarms from the main signal modulation drivers 11a-11n, λ-fault alarms from the optical sources 61a-61n, and M-fault alarms from the external modulators 14a-14n. Based on those various alarms, the supervisory control unit 62 recognizes a channel fault and thereby determines the degree of modulation before sending the command signal. That is, a value B of the standard degree of modulation, which is applicable to an external modulator 63 (to be described later on) for command signal modulation when all the N channels are operational, is first determined to a certain level depending on demodulators' sensitivity in the receiver. Then, in consideration of the number (L) of the faulty channels, the degree of modulation for the external modulator 63 for the command signal is determined as {N/(N-L)}B. Note that the modulation in the second embodiment is performed not at individual channels but as a whole, as opposed to the way in the first embodiment. Triggered by an external operation, a command signal generator unit (not shown) integrated in the supervisory control unit 62 actually generates the command signal whose amplitude is adjusted to the determined degree of modulation.

Incidentally, even if a part of the faulty channels has recovered their performance, the supervisory control unit 62 will set the degree of modulation as described above, assuming that L channels are still out of order.

At the final stage, the external modulator 63 modulates the optical signals with the command signal whose amplitude is adjusted so as to obtain the intended degree of modulation. This external modulator 63 may comprise lithium-niobate (LiNbO₃) semiconductors or field-absorption effect semiconductor devices.

The above discussion will be summarized as follows. According to the present invention, the sender transmits the command signal or response signal by superimposing it equally on a plurality of main signals conveyed in respective channels. Therefore, the receiver can surely extract the command or response signal even if some of the channels have happened to fail.

Therefore, in the wavelength-division-multiplexed optical data communication systems, the present invention facilitates their supervisory action to maintain the repeaters.

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims and their equivalents.

## Claims

1. A supervisory apparatus for a wavelength-division-multiplexed optical data communication system which provides communications in a plurality of channels multiplexed with a plurality of optical signals having different wavelengths (λ₁ - k_{N}), comprising :
transmission means (2), provided in a sender (1), for superimposing a command signal on a plurality of main signals of the respective channels and transmitting signals thereof; and
extraction means (8), provided in a receiver (7), for extracting the command signal out of the signals transmitted by said transmission means.

2. A supervisory apparatus according to claim 1, wherein said extraction means (8) extracts all components of the command signal superimposed on the plurality of main signals conveyed on the respective channels.

3. A supervisory apparatus according to claim 1, wherein said transmission means comprises:
a plurality of optical source means (13a-13n), respectively provided for the plurality of channels, for generating light beams having wavelengths (λ₁ - λ_{N}) different from each other;
command signal modulation means (12a - 12n) for applying direct modulation to each of the light beams with the command signal when said optical source means generates the light beams;
a plurality of main signal modulation means (11a - 11n), respectively provided for the plurality of channels, for applying external modulation with the respective main signals to the light beams which are directly modulated with the command signal; and
multiplexing means (16) for multiplexing the light beams output from said main signal modulation means.

4. A supervisory apparatus according to claim 3, wherein said command signal modulation means (12a - 12n) comprises :
faulty channel detecting means (37a - 37n) for detecting faulty channels among N channels, wherein the N is the number of the channels; and
variable-degree modulation means (38) for applying the direct modulation with the command signal in a degree of modulation of {N/(N-L)}A to the light beams generated by said optical source means corresponding to (N-L) operational channels which said faulty channel detecting means has recognized operational, wherein the L is the number of the faulty channels detected by said faulty channel detecting means and A is a degree of modulation to be applied to each of the channels when all the channels are operational.

5. A supervisory apparatus according to claim 1, wherein said transmission means (2) comprises :
a plurality of optical source means (13a - 13n), respectively provided for the plurality of channels, for generating light beams having wavelengths (λ₁ - λ_{N}) different from each other;
a plurality of main signal modulation means (11a - 11n), respectively provided for the plurality of channels, for applying external modulation with the respective main signals to the respective light beams which are generated by said optical source means;
multiplexing means (16) for multiplexing the light beams modulated by said plurality of main signal modulation means ; and
command signal modulation means (12a - 12n) for applying a further external modulation to the light beam outputted by said multiplexing means with the command signal.

6. A supervisory apparatus according to claim 5, wherein said command signal modulation means (12a - 12n) comprises :
faulty channel detecting means (37A-37n) for detecting faulty channels among N channels, wherein N is the number of the channels; and
variable-degree modulation means (38) for applying the further external modulation with the command signal to the light beam outputted by said multiplexing means in a degree of modulation of {N/(N-L)}B, wherein L is the number of the faulty channels detected by said faulty channel detecting means and B is a standard degree of modulation used in said command signal modulation means when all the channels are operational.

7. A supervisory apparatus for a wavelength-division-multiplexed optical data communication system which provides communications in a plurality of channels multiplexed with a plurality of optical signals having different wavelengths (λ₁ - λ_{N}), comprising :
transmission means (2), provided in a sender (1), for superimposing a response signal on a plurality of main signals of the respective channels and transmitting signals thereof; and
extraction means (8) provided in a receiver (7), for extracting the response signal out of the signals transmitted by said transmission means.

8. A supervisory apparatus according to claim 7, wherein said extraction means (8) extracts all components of the response signal superimposed on the plurality of main signals conveyed via the respective channels.

9. A supervisory apparatus according to claim 7, wherein said transmission means (2) comprises :
optical amplification means (47a - 47b) for optically amplifying the plurality of main signals received via the respective channels, and
modulation means (42a-42b) for modulating the plurality of main signals amplified by said optical amplification means with the response signal.

10. A supervisory apparatus according to claim 7, wherein said transmission means (2) comprises :
optical amplification means (47a - 47b) for optically amplifying the plurality of main signals received via the respective channels, said optical amplification means comprising erbium-doped fiber devices, and
modulation means (48a, 48b, 49a, 49b) for varying a gain of said optical amplification means in accordance with the response signal.
